# EUROPEAN PATENT APPLICATION

(11) **EP 0 826 546 A1**
(43) Date of publication of application: **04.03.1998**
(21) Application number: 96902286.2
(22) Date of filing: 26.02.1996
(51) Int. Cl.: B60K 28/06, B60R 25/04

(54) **IGNITION SYSTEM FOR MOTOR VEHICLES THROUGH AN ALCOHOLEMIA SENSOR**

(71) Applicant: Treposa, La Massana (AD); Aramburu Arbelaiz, Melchor, La Massana (AD)
(72) Inventor: ARAMBURU ARBELAIZ, Melchor, Avenida Sant Antoni,La Massana (AD)
(74) Representative: Urizar Anasagasti, José Antonio
(86) International application number: ES9600022
(87) International publication number: WO9731797

(57) **Abstract**

Ignition system for motor vehicles through an alcoholemia sensor integrated into an electronic system, based on a microprocessor, which, after obtaining the analog data provided by the alcoholemia transducer sensor, also indicated in a digital signalling display, operates on a contactor which will or will not cut off the operation of the fuel pump, with the aim to prevent the start-up of the vehicle engine if the alcoholemia level processed by said microprocessor is higher than a maximum level legally authorized.

## Description

This invention refers to an ignition system for motor vehicles by means of an alcoholemia sensor, to detect the level of alcohol in the air breathed out by the vehicle driver, preventing ignition if said level is higher than that permitted by the legislation in force.

The object of this invention tries to introduce itself into the market as an aid for drivers, to make them aware of their responsibilities facing to the law regarding driving after having taken certain amounts of alcohol, the most important reason being to dissuade the drunken driver from driving his/her vehicle in said state.

Generally, this type of control is carried out by the pertinent state authorities or the organism entrusted with traffic on roads and through cities. The component checking the level of alcoholemia in an individual is a device, which on blowing inside produces a different colour in an indicator, according to whether the individual's alcoholemia level exceeds the legal limit or not, proceeding to the locking of his/her vehicle if the check shows that the individual is in a drunken state. The problem of these controls is that they are sporadic, only being effective in determined moments, so that they do not prevent determined people who intend to drive whilst drunk from doing so if no control exists on their route.

Recently, some devices equipped with alcoholemia sensors at the disposal of the public in general have been installed in certain bars, restaurants, discotheques and places where alcohol is consumed, where individuals can check their level of drunkenness after having consumed determined amounts of alcohol. This measure, accepted by the authorities, does not prevent the individual from driving his/her vehicle with due care, in spite of having performed the test, making the latter an inefficient preventive method.

If the alcoholemia level of an individual is sufficiently high, this invention prevents him/her from starting the engine of his/her vehicle, until the alcohol level in his/her blood decreases to a level permitted by the law.

The system of the invention is integrated in the vehicle, it being possible to distinguish three components: the first one, to which the driver has access, is the alcohol meter or alcohol level sensor; the second is the electronic control directing the system as a whole based on a microprocessor; and the third is a device commanded by the electronic control preventing the engine from starting.

To understand the object of this invention better, a practical embodiment of the invention has been shown in the drawings. In said drawings:
Figure 1 corresponds to a block diagram of the invention system, where each of the system component blocks is specified, with their dependence of connection between each other.
Figure 2 corresponds to an internal view of a vehicle engine with the arrangement of the system inside.

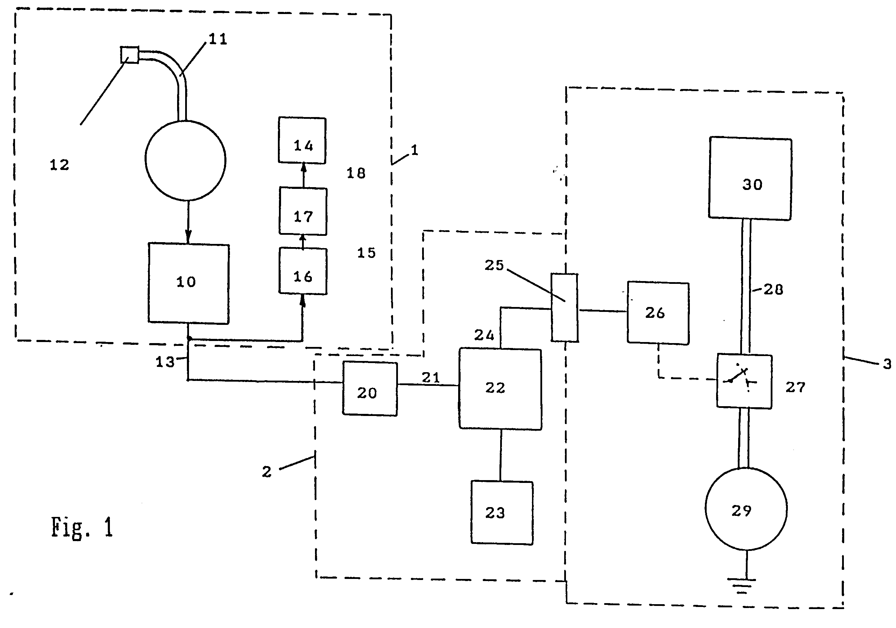

As is described in figure 1, the system consists of three main blocks, which can be distinguished as the sensor block (1), the controller block (2) and the engine activation block (3).

The sensor block (1) consists of an alcoholemia level sensor (10) equipped with a flexible telescopic pipe (11), with the purpose of hiding it after its use, being equipped with a disposable nozzle (12) in the end where the individual has to blow. Said sensor (10) consists of the conventional equipment to convert the physical test into an analogical electric level, which communicates by means of the communication line (13) with the controller block (2). Moreover, said sensor block (1) is equipped with a digital numerical character signaller (14), preferably of quartz crystal, although it may also be of any type of those known by experts in the matter, which by means of an analogical-digital converter circuit (16) transforms the analogical output signal from the alcohol meter (10) into a digital signal of a determined number of bits or elemental positions, passing said information to a coder (17) that translates said information, which is contributed in the line (15), into a encoded digital information through the line (18) to the signaller (14). The purpose of this signaller (14) is to contribute quantitative information of the blood alcohol level.

The information delivered from the sensor block (1) through the line (13) passes to the controller block (2), entering in an analogical-digital converter circuit (20), which adapts said analogical information (13) in a digital signal (21) of a determined number of bits, said information being which is transferred through the data bus (21) to the microprocessor (22). The microprocessor (22) is assisted by a non-volatile memory (23) of the EPROM type, in which the sequential programme that guides the microprocessor in its calculation, as well as the maximum permitted alcoholemia limit data are memorized, it being possible to vary the latter according to the legislation in force.

After the result of the microprocessor calculation (22) assisted by the EPROM memory (23), a digital signal ALL/NOTHING is provided to an external contactor (26), which interlocks or not a contact (27) associated to it and integrated in the supply line (28) of the fuel pump (29) of the vehicle, coming from the battery (30).

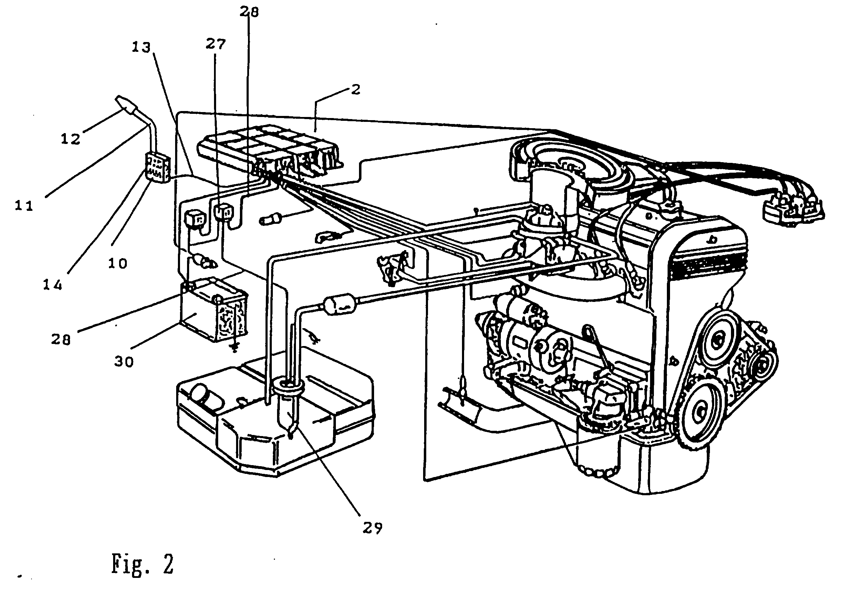

In figure 2, a preferred practical embodiment for the referred location of the remaining devices inside the vehicle can be seen, it being possible in said diagram to locate a box (2) where the electronic circuits of the controller block (2) may be placed, from which the analogical communication line (13) with the alcohol meter (10) is extracted, the latter being equipped with the signaller (14) and the flexible pipe (11) to blow inside. Also, the contactor (27) can be observed, to which the ignition data line (24) from the block (2), and, coming from the battery (30), the fuel pump (29) supply line (28) are connected.

Having sufficiently described the nature of this invention, as well as how to implement it, we only have to add that changes in materials are possible provided that they do not fundamentally change the characteristics claimed below.

## Claims

1. An ignition system for motorized vehicles through an alcoholemia sensor, to detect the level of alcohol in the air breathed out by the vehicle driver, characterized in that on detecting the level of alcohol in the air breathed by said vehicle driver, the starting of the vehicle is automatically prevented if said level is higher than that permitted by the legislation in force, or the starting of the vehicle is permitted if said level is lower than that permitted by the legislation in force, said system consisting of an alcohol meter to detect the level of alcoholemia and which is connected to an electronic exchange entrusted with receiving the signals sent by the alcohol meter, adequating said signals for its further processing, analyzing the latter and sending electrical ignition or stopping impulses to the vehicle fuel pump.

2. An ignition system, according to claim 1, characterized in that the alcohol meter is equipped with a pipe to blow into, said pipe being telescopic with the purpose of hiding it when not in use, a disposable nozzle at its end and a display to view the alcohol level digitally.

3. An ignition system, according to the previous claims, characterized in that the electronic exchange consists of a microprocessor entrusted with analyzing the signals corresponding to the alcoholemia level and sending signals associated to vehicle ignition or stopping to the fuel pump; an analogical-digital converter to convert analogical signals from the alcohol meter into electric impulses; a non-volatile EPROM memory to conserve the data related to the possible anomalies during engine operation.

4. An ignition system, according to the previous claims, characterize in that it may be adjusted to control the alcoholemia level according to the legislation in force, at any time or for each country, it being possible to cut fuel supply, both in the case of petrol and diesel oil.
